# EUROPÄISCHE PATENTSCHRIFT

(11) **EP 0 508 236 B1**
(45) Veröffentlichungstag und Bekanntmachung des Hinweises auf die Patenterteilung: **08.03.1995**
(21) Anmeldenummer: 92105271.8
(22) Anmeldetag: 27.03.1992
(51) Int. Cl.: G01B 7/02, G01F 23/70

(54) **Weggeber**
Position transducer
Capteur de déplacement

(30) Priorität: 12.04.1991 DE 4111977
(43) Veröffentlichungstag der Anmeldung: 14.10.1992
(73) Patentinhaber: IMO INDUSTRIES GMBH, D-61203 Reichelsheim (DE)
(72) Erfinder: Wallisch, Walter, W-6300 Giessen (DE)
(74) Vertreter: Schlagwein, Udo, Dipl.-Ing.

(56) Entgegenhaltungen:
- DE-A- 3 542 912
- DE-A- 3 919 414
- GB-A- 2 053 477
- US-A- 3 646 293
- US-A- 3 826 139
- US-A- 4 730 491
- PATENT ABSTRACTS OF JAPAN, vol. 011, no. 122 (E-500), 16. April 1987 & JP-A-61269650

## Beschreibung

Die Erfindung betrifft einen Weggeber mit einem übereinander mehrere Reedkontakte aufweisenden Reedkontaktträger und einem entlang des Reedkontaktträgers beweglichen, zur Betätigung der Reedkontakte eine Magnetanordnung aufweisenden Magnetträger. Ein solcher Weggeber ist Gegenstand der DE-B-24 08 124.

Bei dem bekannten Weggeber handelt es sich um einen Füllstandsgeber. Seine Magnetanordnung besteht aus mehreren, auf einem gemeinsamen Teilkreis angeordneten, axial zum den Magnetträger bildenden Schwimmer ausgerichteten Stabmagneten. Infolge der axialen Magnetisierung dieser Stabmagnete verläuft das Magnetfeld von den Polen der Stabmagnete einerseits durch den Reedkontaktträger, um dort die Reedkontakte betätigen zu können, andererseits aber auch außenseitig des Schwimmers. Diese äußeren Magnetfelder sind für viele Anwendungsfälle störend, da sie Meßgeräte oder elektronische Steuereinrichtungen unkontrolliert beeinflussen können. Sie müssen deshalb oftmals durch Gegenmagnete kompensiert werden, was relativ aufwendig ist.

Der Erfindung liegt das Problem zugrunde, einen Weggeber der eingangs genannten Art so auszubilden, daß er möglichst streufeldarm zu arbeiten vermag, so daß auf eine Kompensation äußerer Magnetfelder durch Gegenmagnete verzichtet werden kann.

Dieses Problem wird erfindungsgemäß dadurch gelöst, daß die Magnetanordnung auf zwei übereinander liegenden Teilkreisen jeweils mehrere Magnetkörper aufweist und alle Magnetkörper desselben Teilkreises axial und quer zu dem Reedkontaktträger 2 gleichsinnig, jedoch gegensinnig zu den Magnetkörpern des jeweils anderen Teilkreises magnetisiert sind.

Ein solcher Weggeber ist sehr kostengünstig herstellbar und benötigt nur relativ schwache Magnetkörper, weil ein starkes, sich durch die gleichen Richtungen des Magnetfeldes verstärkendes inneres Magnetfeld entsteht. Die äußeren, gegenläufigen Felder heben sich gegenseitig weitgehend auf, so daß auf einen Gegenmagnet zur Kompensation von Streufeldern verzichtet werden kann.

Der Magnetträger vermag die Reedkontakte unabhängig von seiner Winkellage zum Reedkontaktträger zuverlässig zu betätigen, wenn auf jedem Teilkreis insgesamt fünf Magnetkörper angeordnet sind.

Die Erfindung läßt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig.1: einen senkrechten Schnitt durch einen als Füllstandsgeber ausgebildeten Weggeber nach der Erfindung,
- Fig.2: einen horizontalen Schnitt durch einen Magnetträger des Weggebers.

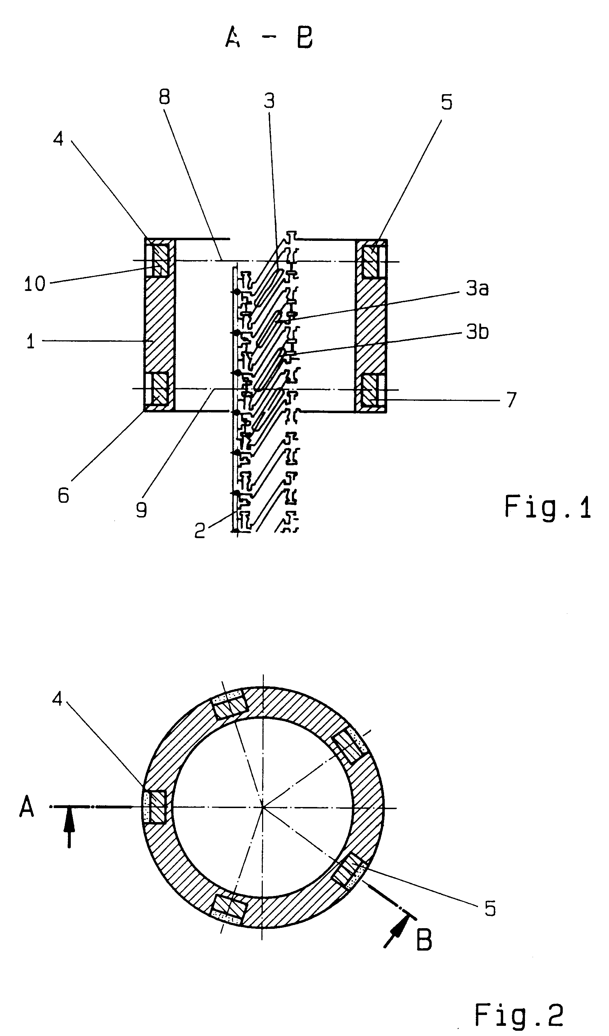

Die Figur 1 zeigt einen von einem als Schwimmer ausgebildeten Magnetträger 1 umgebenen Reedkontaktträger 2, welcher übereinander schräg ausgerichtete Reedkontakte, beispielsweise die Reedkontakte 3, 3a, 3b, hat. Zur Betätigung dieser Reedkontakte 3, 3a, 3b ist im Magnetträger 1 eine Magnetanordnung vorgesehen, von der in Figur 1 vier Magnete 4, 5, 6, 7 zu sehen sind. Diese befinden sich auf zwei übereinander liegenden Teilkreisen 8, 9. Wie die Figur 2 zeigt, sind auf jedem der Teilkreise 8, 9 insgesamt fünf Magnetkörper 4, 5 bzw. 6, 7 vorgesehen, die alle axial magnetisiert sind. Die Magnetisierungsrichtung der Magnetkörper 4, 5 des oberen Teilkreises 8 ist gegensinnig zu der des unteren Teilkreises 9. Dadurch ergibt sich ein sehr starkes, die Reedkontakte 3 schaltendes inneres Magnetfeld und ein schwaches, äußeres Streufeld.

Bei den einzelnen Magnetkörpern 4, 5, 6, 7 handelt es sich um kleine Zylinder, welche jeweils in eine radiale Bohrung 10 des Magnetträgers 1 eingesetzt sind.

### Auflistung der verwendeten Bezugszeichen

- 1: Magnetträger
- 2: Reedkontaktträger
- 3: Reedkontakt
- 4: Magnet
- 5: Magnet
- 6: Magnet
- 7: Magnet
- 8: Teilkreis
- 9: Teilkreis
- 10: Bohrung

## Patentansprüche

1. Weggeber mit einem übereinander mehrere Reedkontakte (3) aufweisenden Reedkontaktträger (2) und einem entlang des Reedkontaktträgers beweglichen, zur Betätigung der Reedkontakte eine Magnetanordnung aufweisenden Magnetträger (1), dadurch gekennzeichnet, daß die Magnetanordnung auf zwei übereinander liegenden Teilkreisen (8, 9) jeweils mehrere Magnetkörper (4, 5, 6, 7) aufweist und alle Magnetkörper (4, 5) desselben Teilkreises (8 oder 9) axial und quer zu dem Reedkontaktträger (2) gleichsinnig, jedoch gegensinnig zu den Magnetkörpern (6, 7) des jeweils anderen Teilkreises (9) magnetisiert sind.

2. Weggeber nach Anspruch 1, dadurch gekennzeichnet, daß auf jedem Teilkreis (8, 9) insgesamt fünf Magnetkörper (4, 5; 6, 7) angeordnet sind.

## Claims

1. Transducer for level detection with a Reed switch carrier (2), having several Reed switches (3) one above the other and a magnet carrier (1) with an arrangement of magnets for activating the Reed switches, the magnet carrier being moveable along the Reed switch carrier, **characterised in that** the arrangement of magnets has several magnets (4, 5, 6, 7) on two pitch circles (8, 9), lying one above the other, whereby all the magnets (4, 5) of the same pitch circle (8, or 9) are magnetised in axial direction and perpendicular to the Reed switch carrier (2) in the same direction, but in opposite direction with regard to the magnets (6, 7) of the respective other pitch circle (9).

2. Transducer according to claim 1, **characterised in that**, on each pitch sircle (8, 9) a total of five magnets (4, 5; 6, 7) are arranged .

## Revendications

1. Capteur de déplacement ayant un porteur relais reed (2) avec plusieurs des relais reeds (3) l'un sur l'autre et un porteur d'aimants (1) ayant un arrangement d'aimants pour activer les relais reeds, le porteur étant mobile le long du porteur relais reed (2), **caractérisé en ce que** l'arrangement d'aimants a plusieurs aimants (4, 5, 6, 7) sur deux cercles primitifs de référence (8, 9) qui sont superposés et en ce que tous les aimants (4, 5) d'un cercle primitif de référence (8 ou 9) sont magnétisés en direction axiale et transversale du porteur relais reed (2) au même sens mais au sens inverse en regard des aimants (6, 7) d'autre cercle primitif de référence (9) en chaque cas.

2. Capteur de déplacement selon la revendication 1, **caractérisé en ce que** sur chaque cercle primitif de référence (8, 9) sont arrangés en tout cinq aimants (4, 5; 6, 7).
